# EUROPÄISCHE PATENTSCHRIFT

(11) **EP 1 439 943 B1**
(45) Veröffentlichungstag und Bekanntmachung des Hinweises auf die Patenterteilung: **03.10.2007**
(21) Anmeldenummer: 02782991.0
(22) Anmeldetag: 23.10.2002
(51) Int. Cl.: B29C 47/10

(54) **KUNSTSTOFFVERARBEITENDE MASCHINE ZUM HERSTELLEN VON FASERBELADENEN, THERMOPLASTISCHEN KUNSTSTOFFPRODUKTEN**
PLASTICS PROCESSING MACHINE FOR PRODUCTION OF FIBRE-FILLED THERMOPLASTIC PLASTIC PRODUCTS
MACHINE DE TRANSFORMATION DE MATIERES PLASTIQUE PERMETTANT DE FABRIQUER DES PRODUITS EN MATIERES PLASTIQUES THERMOPLASTIQUES CHARGES DE FIBRES

(30) Priorität: 23.10.2001 DE 10152246
(43) Veröffentlichungstag der Anmeldung: 28.07.2004
(73) Patentinhaber: Krauss Maffei GmbH, 80997 München (DE)
(72) Erfinder: SIEVERDING, Matthias, Newton, NC 28658 (US); ZWIESELE, Jochen, 80799 München (DE); ZIMMET, Rainer, 74382 Neckarwestheim (DE); LABERER, Roman, 85247 Oberroth (DE); SEDLACEK, Josef, CH-7554 Sent (CH); WOLF, Rainer, 35039 Marburg (DE)
(74) Vertreter: Wilhelm, Ludwig
(86) Internationale Anmeldenummer: PCT/EP2002/011861
(87) Internationale Veröffentlichungsnummer: WO 2003/035365

(56) Entgegenhaltungen:
- DE-A- 2 100 096
- DE-A- 3 541 532
- FR-A- 2 777 221
- US-A- 5 185 117

## Beschreibung

Die Erfindung bezieht sich auf eine kunststoffverarbeitende Maschine zum Herstellen von faserbeladenen, thermoplastischen Kunststoffprodukten gemäß dem Oberbegriff des Anspruchs 1 und auf eine Wiegeeinrichtung zur Verwendung bei einer solchen Maschine gemäß dem Oberbegriff des Anspruchs 7.

Es ist allgemein üblich, die mechanischen Eigenschaften von thermosplastischen Kunststoffen durch die Zugabe von Fasermaterial, insbesondere von Glasfasern, zu verbessern. Hierzu werden die Glasfasern, die auf Spulen, Rollen oder auch auf sogenannten Rovings gelagert werden, durch eine Zuführöffnung in den Extruder, der das Thermoplastgranulat plastifiziert, eingeführt. Durch die Drehbewegung der Extruderschnecke werden die Glasfasern in die Extruderkavität eingezogen und während der nachfolgenden Schneckendrehungen zerhackt, so dass sie sich in der Plastifizierung gleichmäßig verteilen. Um eine gleichbleibende Qualität der produzierten Kunststoffprodukte gewährleisten zu können, muss sicher gestellt werden, dass das Mengenverhältnis von Kunststoffgranulat bzw. Plastifizierung und Faseranteilen in der Mischung konstant bleibt.

Aus der DE 35 415 32 ist eine Vorrichtung bekannt, mittels derer das Gewichtsverhältnis zwischen Thermoplast- und Fasermaterial konstant gehalten werden soll. Hierzu werden die Rovings mit dem Fasermaterial auf einer Wägebrücke angeordnet, und die von den Rovings abgezogenen Fasermenge wird ermittelt und mit einem Sollwert verglichen. Dieser Vergleich von Soll- und Istwert findet in einem Regelgerät statt, das bei Abweichungen derart auf die jeweilige Schneckendrehzahl des Extruders einwirkt, dass bei Unterschreiten des Sollwerts die Schneckendrehzahl entsprechend erhöht und somit mehr Fasermaterial eingezogen wird bzw. bei Überschreiten des Sollwertes die Schneckendrehzahl entsprechend reduziert wird.

Ein Nachteil dieser bekannten Vorrichtung liegt in der großen Messungenauigkeit.

Da die pro Zeiteinheit abgezogene Fasermasse sehr klein im Vergleich zur Masse des bzw. der auf der Wägebrücke befindlichen Rovings ist, sind hochsensible Messungen erforderlich. Insbesondere bei Rovings mit starker Schlichte werden jedoch sehr hohe Abzugskräfte zum Abziehen der Glasfasern benötigt. Um beim Abziehen ein Knicken oder Reißen der Fasern zu vermeiden, sollte der Abzug aus dem Roving in etwa vertikal erfolgen. Durch diese hohen vertikal wirkenden Abzugskräfte werden die Messergebnisse der Wiegeeinrichtung stark beeinflusst. Bei Versuchsreihen zu diesem Thema wurden starke Messwertschwankungen festgestellt, die sich direkt auf die Qualität der Kunststoffprodukte auswirken.

Aufgabe der vorliegenden Erfindung ist es, die Messgenauigkeit der Wiegeeinrichtung zu erhöhen, die die dem Extruder zugeführte Fasermenge ermittelt, um so die Qualität der erzeugten Kunststoffprodukte zu verbessern.

Dies wird durch die Merkmale des Anspruchs 1 sowie des Anspruchs 7 erreicht.

Erfindungsgemäß wird für die Faserzufuhr in den Extruder eine Faserzufuhreinrichtung verwendet, die es ermöglicht, die Abzugsrichtung der Fasern aus dem Roving so umzulenken, dass die Abzugskraft das Messergebnis nicht beeinflusst. Dies geschieht dadurch, dass als Teil der Faserzufuhreinrichtung eine erste Faserführungseinrichtung vorgesehen ist, die fest mit dem Waagteller der Wiegeeinrichtung verbunden ist und die die Abzugsrichtung der Fasern von den Rollen, Spulen, Rovings oder dergleichen so umlenkt, dass sich die Kraftkomponenten, die parallel zur Schwerkraft wirken, nämlich die nach oben gerichtete Abzugskraft und die auf die Umlenkungen wirkende Resultierende, gegenseitig aufheben. So findet eine effektive Querkraftentkopplung statt, eine nur senkrecht zur Schwerkraft wirkende Abzugskraft kann das Messergebnis der Wiegeeinrichtung nicht beeinflussen.

Entkoppelt von dem Waagtellersystem befindet sich zumindest eine weitere Faserführungseinrichtung, die die Fasern weiterleitet, so dass sie schließlich in den Extruder eingespeist werden können. Diese zweite Faserführungseinrichtung wird relativ zum Waagteller so angeordnet, dass die Faserführung zwischen erster und zweiter Faserführungseinrichtung im wesentlichen senkrecht zur Schwerkraft verläuft. Hierdurch wirken Kräfte mit Komponenten parallel zur im wesentlichen senkrecht wirkenden Schwerkraft nur auf fest mit dem Waagteller verbundene Teile der Fasertührungseinrichtung und heben sich gegenseitig auf, das Messergebnis kann durch sie also nicht verfälscht werden.

Da die bevorzugte Faserabzugsrichtung aus Rollen, Spulen, Rovings oder dergleichen nicht horizontal ist, muss die erste Faserführungseinrichtung mindestens ein Umlenkelement umfassen, das die Faserabzugsrichtung so umorientiert, dass die effektive Abzugsrichtung bei Auskopplung aus dem Waagtellersystem im wesentlichen senkrecht zur Schwerkraft verläuft. Hierbei ist es vorteilhaft, wenn die durch das Umlenkelement bewirkte Änderung der Abzugsrichtung der Fasern weniger als 180°, insbesondere weniger als 90° beträgt.

In der Praxis wird man für eine Umlenkung um 90° mindestens zwei Umlenkelemente einsetzen, um eine zu große Kantenbelastung der Fasern zu vermeiden.

Als vorteilhafte Umlenkelemente haben sich Stangen erwiesen, die im wesentlichen senkrecht zur Faserabzugsrichtung orientiert sind und keine scharfen Kanten aufweisen sollten. Um Abrieb und Zugbelastung der Fasern zu minimieren, werden Oberflächenmaterialien mit geringer Reibung bevorzugt. Besonders geeignet sind Keramikstangen oder Stangen mit einer Keramikoberfläche.

In einer weiteren vorteilhaften Ausführungsform werden als Umlenkelemente Umlenkrollen eingesetzt, deren Abrollflächen ebenfalls bevorzugt aus Keramik sind.

Des weiteren betrifft die Erfindung eine Wiegeeinrichtung zur Verwendung bei einer kunststoffverarbeitenden Maschine, bei der auf einem Waagteller Spulen, Rollen, Rovings oder dergleichen angeordnet sind, und bei der eine erste Faserführungseinrichtung als Teil einer Faserabzugseinrichtung fest mit dem Waagteller verbunden ist und so die oben beschriebene effektive Querkraftentkopplung ermöglicht.

Im Anschluß wird ein Ausführungsbeispiel der vorliegenden Erfindung anhand von Zeichnungen näher erläutert.
- Figur 1: zeigt eine erste Ausführungsform einer erfindungsgemäßen Faserzufuhreinrichtung mit einer ersten und einer zweiten Faserfuhrungseinrichtung und
- Figur 2: zeigt einen Extruder mit einer Faserzufuhreinrichtung gemäß dem Stand der Technik.

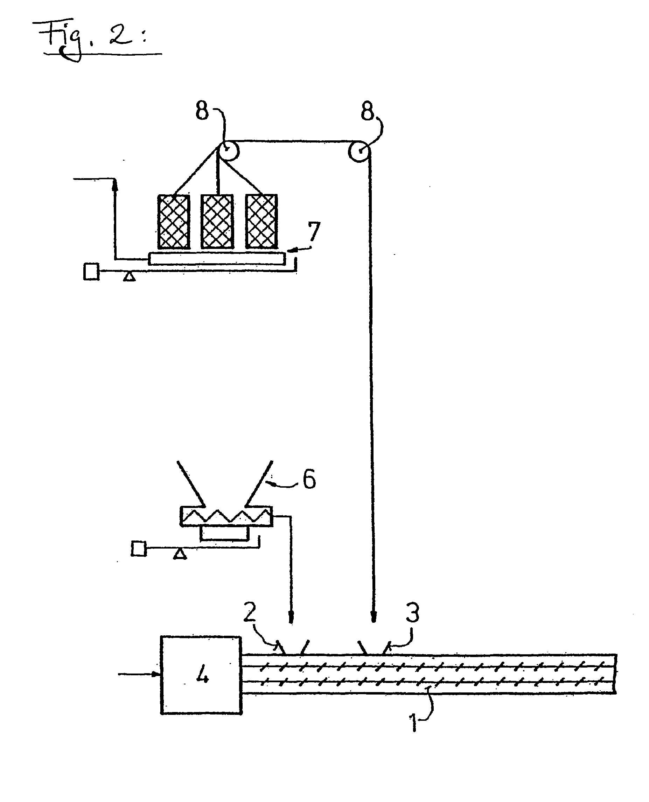

Der Stand der Technik ist in Fig. 2 dargestellt. Ein Doppelschneckenextruder 1 wird durch einen Motor 4 angetrieben. Durch eine erste Einführöffnung 2 wird Thermoplastgranulat von einer Dosiereinrichtung 6 in die Extruderkavität eingebracht, durch eine zweite Einführöffnung 3 werden Fasern, die von auf einem Waagteller 7 angeordneten Rovings über Faserführeinrichtungen 8 abgezogen werden, in die Kavität eingeführt. Eine nicht dargestellte Regeleinheit regelt die Schneckendrehzahl der Extruderschnecken in Abhängigkeit von der abgezogenen Fasermenge.

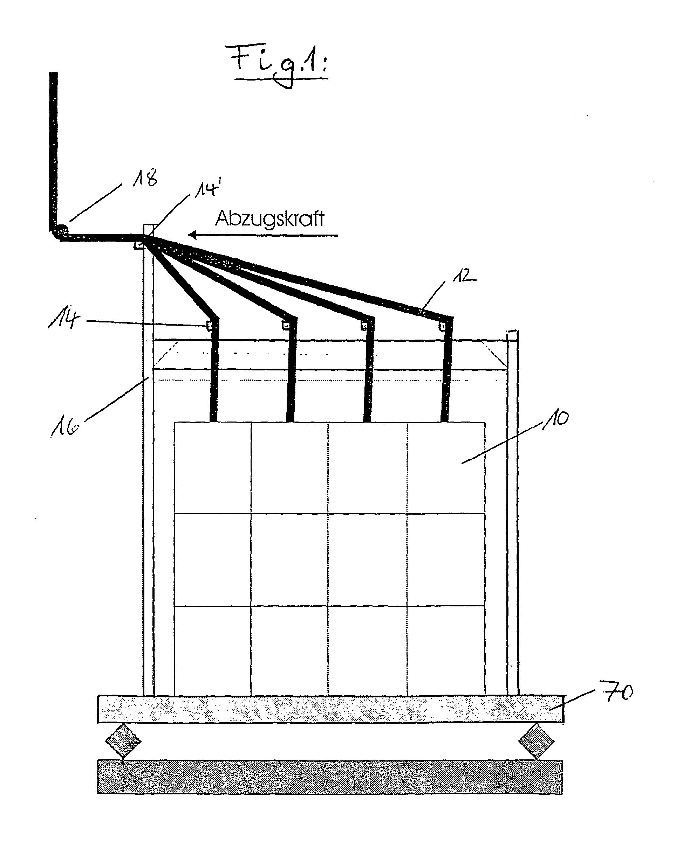

In Figur 1 ist ein wiegevorrichtungsseitiger Teil der erfindungsgemäßen Faserzufüheinrichtung dargestellt, die für die Zuführung der Glasfasern von Spulen, Rollen, Rovings 10 oder dergleichen in einen Extruder benötigt wird. Auf einem Waagteller 70 der Wiegeeinrichtung ist ein Rahmen 16 fest montiert, an dem Umlenkelemente 14, 14' angebracht sind. In der dargestellten Ausführungsform ist für jede Faser 12 ein eigenes Umlenkelement 14 vorgesehen, über ein gemeinsames Umlenkelement 14' kann das Faserbündel aus dem Waagtellersystem ausgekoppelt werden. Außerhalb dieses Systems gibt es mindestens eine zweite Faserführungseinrichtung 18 zur Weiterführung des Faserstrangs 12 in den Extruder 1. Die Rovings 10 werden auf dem Waagteller 70 angeordnet, und die Fasern 12 werden im wesentlichen vertikal entgegen der Richtung der Schwerkraft aus den Rovings 10 abgezogen. Um eine Beeinflussung des Messergebnisses der Wiegeeinrichtung durch diese der Schwerkraft entgegenwirkende Kraftkomponente zu vermeiden, wird die Abzugsrichtung der Fasern durch die Umlenkelemente 14, 14', die Teil einer ersten, fest mit dem Waagteller verbundenen Faserführungseinrichtung sind, so umgelenkt, dass die Faserabzugsrichtung beim Verlassen des Systems aus Waagteller 70 und erster Faserführungseinrichtung im wesentlichen senkrecht zur Schwerkraft orientiert ist. Außerhalb dieses Systems aus Waagteller 70 und erster Faserführungseinrichtung werden die Fasern mindestens einer zweiten Faserführungseinrichtung 18 zugeführt, die vom Waagteller 70 entkoppelt derart anordnet ist, dass der Faserverlauf zwischen erster und zweiter Führungseinrichtung im wesentlichen waagerecht verläuft. Da sich die parallel zur Schwerkraft verlaufenden Kraftkomponenten innerhalb des Systems aus Waagteller und erster Faserführungseinrichtung gegenseitig aufheben, wird hierdurch eine effektive Querkraftentkopplung beim Faserabzug erreicht und die Messergebnisse der Wiegeeinrichtung sind hoch präzise und zuverlässig.

In Abhängigkeit von den erhaltenen Messergebnissen kann so über eine nicht dargestellte Regeleinheit die Thermoplastzufuhr in den Extruder und/oder die Schneckendrehzahl des Extruders gesteuert werden. Durch eine mechanisch einfach durchzuführende Entkopplung von senkrechten und waagrechten während des Faserabzugs auftretenden Kraftkomponenten erhält man so eine hochpräzise Messung. Die hierdurch gewährleistete hohe Prozessqualität erlaubt es, Kunststoffprodukte mit konstantem Thermoplast-Faser-Verhältnis herzustellen.

## Patentansprüche

1. Kunststoffverarbeitende Maschine zum Herstellen von faserbeladenen thermoplastischen Kunststoff-Produkten umfassend
- einen Extruder (1),
- eine Faserzufuhreinrichtung zum Zuführen von auf Spulen, Rollen, Rovings oder dergleichen (10) befindlichem Fasermaterial in den Extruder (1), und
- eine Wiegeeinrichtung mit einem Waagteller (70), auf dem die Spulen, Rollen, Rovings oder dergleichen (10) zum Ermitteln der dem Extruder zugeführten Fasermenge aufgenommen sind,
**dadurch gekennzeichnet, daß**
als Teil der Faserzufuhreinrichtung eine erste Faserführungseinrichtung (16) zum Abnehmen der Fasern von den Spulen, Rollen, Rovings oder dergleichen (10) vorgesehen ist, die fest mit dem Waagteller (70) verbunden ist, und zumindest eine zweite Faserführungseinrichtung (18) vorgesehen ist, die entkoppelt vom Waagteller (70) derart angeordnet ist, dass der Faserverlauf zwischen erster und zweiter Führungsvorrichtung im wesentlichen senkrecht zur Schwerkraft verläuft.

2. Kunststoffverarbeitende Maschine nach Anspruch 1,
**dadurch gekennzeichnet, daß**
die erste Faserführungseinrichtung (16) mindestens ein Umlenkelement (14) umfasst, wobei durch jedes Umlenkelement (14) die Faserabzugsrichtung um weniger als 180° geändert wird.

3. Kunststoffverarbeitende Maschine nach Anspruch 1 oder Anspruch 2,
**dadurch gekennzeichnet, daß**
die Umlenkelemente (14) als Stangen ausgebildet sind, die im wesentlichen senkrecht zur Faserabzugsrichtung orientiert sind.

4. Kunststoffverarbeitende Maschine nach Anspruch 3,
**dadurch gekennzeichnet, daß**
die Stangen aus Keramik bestehen oder Keramikoberflächen aufweisen.

5. Kunststoffverarbeitende Maschine nach Anspruch 1 oder Anspruch 2,
**dadurch gekennzeichnet, daß**
die Umlenkelemente (14) als Rollen ausgebildet sind.

6. Kunststoffverarbeitende Maschine nach Anspruch 5,
**dadurch gekennzeichnet, daß**
zumindest die Abrollflächen der Umlenkrollen aus Keramik sind.

7. Wiegeeinrichtung zur Verwendung bei einer kunststoffverarbeitenden Maschine bei der auf einem Waagteller (70) Spulen, Rollen, Rovings oder dergleichen (10) anordenbar sind,
**dadurch gekennzeichnet, daß**
als Teil einer Faserabzugseinrichtung eine erste Faserführungseinrichtung (16) zum Abnehmen der Fasern von den Spulen, Rollen, Rovings oder dergleichen (10) fest mit dem Waagteller (70) verbunden ist.

## Claims

1. Plastics processing machine for production of fibre-filled thermoplastic products comprising
- an extruder (1),
- a fibre feeding device for supplying fibre material located on spools, rolls, rovings or the like (10) to the extruder (1) and
- a weighing device comprising a weighing plate (70) on which the spools, rolls, rovings or the like (10) are received for determining the amount of fibre supplied to the extruder,
**characterised in that**
as part of the fibre feeding device, a first fibre feeding device (16) securely fixed to the weighing plate (70) is provided for removing the fibres from the spools, roller, rovings or the like (10) and at least one second fibre guide device (18) decoupled from the weighing plate (70) is provided in such a manner that the fibre route between the first and second guide device runs substantially perpendicular to the force of gravity.

2. The plastics processing machine according to claim 1,
**characterised in that**
the first fibre device (16) comprises at least one deflecting element (14), wherein the fibre take-off direction is deflected by less than 180° by each deflecting element (14).

3. The plastics processing machine according to claim 1 or claim 2,
**characterised in that**
the deflecting elements (14) are formed as rods which are oriented substantially perpendicular to the fibre take-off direction.

4. The plastics processing machine according to claim 3,
**characterised in that**
the rods consist of ceramic or have ceramic surfaces.

5. The plastics processing machine according to claim 1 or claim 2,
**characterised in that**
the deflecting elements (14) are constructed as rollers.

6. The plastics processing machine according to claim 5,
**characterised in that**
at least the rolling surfaces of the deflecting rollers are made of ceramic.

7. A weighing device for use in a plastics processing machine in which spools, rovings or the like (10) are disposed on a weighing plate (70),
**characterised in that**
as part of the fibre feeding device, a first fibre feeding device (16) securely fixed to the weighing plate (70) is provided for removing the fibres from the spools, rollers, rovings or the like (10).

## Revendications

1. Machine de transformation de matières plastiques pour la fabrication de produits en matières plastiques thermoplastiques chargées de fibres, comprenant les éléments suivants :
- une extrudeuse (1),
- un dispositif d'alimentation en fibres pour amener des matières fibreuses stockées sur des bobines, des rouleaux, des rovings ou autres (10) vers l'extrudeuse (1), et
- un dispositif de pesage avec un plateau de balance (70) accueillant les bobines, rouleaux et rovings ou autres (10) pour l'alimentation de l'extrudeuse en masse fibreuse,
**caractérisée par**
un premier dispositif de guidage de fibres (16) faisant partie du dispositif d'alimentation en fibres, permettant de prélever les fibres des bobines, rouleaux et rovings ou autres (10), qui est relié fixement au plateau de balance (70), et par au moins un deuxième dispositif de guidage des fibres (18), qui est placé séparément du plateau de balance (70), de telle sorte que le passage des fibres entre le premier et le deuxième dispositif de guidage de fibres est essentiellement vertical par rapport à la force de gravité.

2. Machine de transformation de matières plastiques selon la revendication 1,
**caractérisée en ce que**
le premier dispositif de guidage de fibres (16) comprend au moins un élément de déviation (14), chaque élément de déviation (14) permettant de modifier le sens d'extraction des fibres de moins de 180°.

3. Machine de transformation de matières plastiques selon la revendication 1 ou 2,
**caractérisée en ce que**
les éléments de déviation (14) sont conçus comme des tiges, qui sont orientées essentiellement de façon verticale par rapport au sens d'extraction des fibres.

4. Machine de transformation de matières plastiques selon la revendication 3,
**caractérisée en ce que**
les tiges sont constituées de céramique ou comportent une surface en céramique.

5. Machine de transformation de matières plastiques selon la revendication 1 ou 2,
**caractérisée en ce que**
les éléments de déviation (14) sont conçus comme des rouleaux.

6. Machine de transformation de matières plastiques selon la revendication 5,
**caractérisée en ce que**
au moins les surfaces de déroulement des rouleaux de déviation sont en céramique.

7. Dispositif de pesage utilisé avec une machine de transformation de matières plastiques, pouvant accueillir des bobines, rouleaux et rovings ou autres (10) sur un plateau de balance (70),
**caractérisé en ce que**
un premier dispositif de guidage de fibres (16) faisant partie d'un dispositif d'alimentation en fibres et servant à prélever les fibres des bobines, rouleaux et rovings ou autres (10), est relié fixement au plateau de balance (70).
